Europäisches Patentamt

European Patent Office

Office européen des brevets

(19)

(11) Publication number: **0 162 837 B1**

(12) EUROPEAN PATENT SPECIFICATION

(45) Date of publication of patent specification: **11.12.91**

(51) Int. Cl.⁵: **C09D 163/00**, C09D 177/02, C09D 179/02, C09D 5/44, C09D 5/46

(21) Application number: 83903756.1

(22) Date of filing: 31.10.83

(86) International application number:
PCT/US83/01710

(87) International publication number:
WO 85/01950 (09.05.85 85/11)

(54) SELF-CROSSLINKABLE ELECTROCOAT RESINS PREPARED BY ROOM TEMPERATURE REACTIONS OF EPOXY RESINS AND FATTY AMIDOPOLYAMINES.

(43) Date of publication of application:
04.12.85 Bulletin 85/49

(45) Publication of the grant of the patent:
11.12.91 Bulletin 91/50

(84) Designated Contracting States:
BE CH DE FR GB LI NL SE

(56) References cited:
DE-A- 2 603 666        DE-A- 2 749 776
GB-A- 1 235 975        GB-A- 2 038 336
JP-A-51 000 538        US-A- 3 922 253
US-A- 3 947 338        US-A- 4 137 140
US-A- 4 148 772        US-A- 4 182 831
US-A- 4 274 989        US-A- 4 297 261
US-A- 4 315 044

(73) Proprietor: **E.I. DU PONT DE NEMOURS AND COMPANY**
**1007 Market Street**
**Wilmington Delaware 19898(US)**

(84) Designated Contracting States:
**BE CH DE FR GB LI NL SE**

(72) Inventor: **SWIDER, Robert, A.**
**14401 Insker Road**
**Livonia, MI 48154(US)**
Inventor: **HORSCH, Martha, E.**
**8577 Dixie Lane**
**Dearborn Heights, MI 48127(US)**

(74) Representative: **Woodcraft, David Charles et al**
**BROOKES & MARTIN High Holborn House**
**52/54 High Holborn**
**London, WC1V 6SE(GB)**

## Description

### Technical Field

This invention relates to water dispersible cathodically electrodepositable, self-crosslinkable resins. More particularly, these resins are amine-functional and epoxide-functional and are the partially crosslinked, room temperature reaction product of epoxy resins and fatty amidopolyamines.

### Background Art

The coating of electroconductive substrates by electrodeposition is an important industrial process. In this process, a conductive article is immersed as one electrode in a coating composition made from an aqueous dispersion of film-forming polymer. An electric current is passed between the article and a counter electrode in electrical contact with the aqueous dispersion until a desired amount of coating is produced on the article. The article to be coated can be made the anode or the cathode depending upon the ionic nature of the coating system.

Cationic coating compositions generally are derived from resinous compositions containing a basic nitrogen atom which can be neutralized with an acid and then be dissolved or dispersed in water. Sufficient basic nitrogen atoms should be present so that the dispersibility or solubility can be obtained with a minimum amount of acid.

The most commonly employed type of cathodically electrodepositable resins are made by reacting polyepoxide resins with amines at elevated temperatures, as exemplified by US-A-4,137,140 to Belanger and US-A-4,182,831 to Hicks. Belanger teaches forming an electrocoat resin by reacting polyepoxides with polyamines and then modifying the product by reaction with a monoepoxide or a monocarboxylic acid. In the Hicks patent, the electrocoat resin is taught to be the reaction product of polyepoxides, a mixture of primary amines, and a monoepoxide. As illustrated by these patents, when forming this type of resin the amount of amine reacted with the epoxy group containing material is generally at least that amount necessary to react all the epoxy groups and form a hydroxyl amine resin. However, since these resins contain essentially no unreacted epoxide groups available for later crosslinking the amine during curing, they require a crosslinking agent which is capable of reacting with the hydroxyl or amine functionality of the resin during curing to form a thermoset film. The crosslinking agent may be present in the coating bath so as to codeposit with the resin or it may be incorporated into the resin molecule. Hicks and Belanger teach codepositing the resin with a crosslinker such as an aminoplast or phenoplast resin. On the other hand, Jerabek et al in US-A-3,922,253 and 3,947,338 disclose reacting a partially blocked isocyanate crosslinking agent with the epoxy resins and amines, so as to incorporate the crosslinker into the resin molecule. That electrocoat resin product is thus able to self-crosslink during baking to form a thermoset film.

Binders for cathodic electrodeposition have been prepared by simply combining epoxy resins with amine compounds. However, aqueous dispersions of these binders are very unstable, because of the presence of free (unreacted) epoxide groups. Thus, these two component compositions are less than desirable for use as electrodepositable coatings. Such compositions are taught by Munn et al in GB-A-1,235,975 and in Room Temperature Curing Electrodeposited Coatings, A.G. North, J. Oil Colour Chem. Assoc., 53 (1970) 353. While it is generally recognized in these references that the stability of the compositions in the coating bath is usually limited to a few hours, one advantage of this type of coating, when compared to prior art electrodepositable coatings, is taught to be its ability to be cured at low temperatures, e.g., room temperature.

### Disclosure of the Invention

The coating compositions of this invention are cathodically electrodepositable and are characterized in that they comprise an aqueous dispersion of self-crosslinkable resin which contains amine and epoxide groups, the resin being prepared by reacting (A) epoxy resin having, on the average, more than one and up to two epoxide groups per molecule and an epoxide equivalent weight between 400 and 4000, preferably between 450 and 2000, with (B) fatty amidopolyamine containing at least two reactive amine groups and at least three active amine hydrogens per molecule and no other groups capable of reacting with the epoxide groups. The fatty polyamine also contains amide functionality. The fatty portion of the polyamine comprises between 12 and 36 carbon atoms. The epoxy resin and the polyamine are combined and reacted in the presence of an organic solvent in which they are mutually soluble. The reaction solution mixture comprises (i) a total of between 70 and 25 weight percent of reactants (A) and (B) and (ii) between 30 and 75 weight percent solvent. The epoxy resin and the fatty amidopolyamine are reacted in solution in amounts so as to provide between 0.25 and 1.0, preferably between 0.5 and 1.0 reactive amine groups of (B) for each epoxide group of (A). The reaction is carried out at room temperature, i.e., at between 18° and 33° C, preferably between 21° and 27° C, for a period of time so as to react between 20 and 50 percent of the epoxide groups of the epoxy resin with active amine hydrogens to form a partially crosslinked, self-crosslinkable resin. This partially crosslinked, self-crosslinkable resin has a weight average ($\overline{M}_w$) molecular weight of between 1300 and 12,000, preferably between 2400 and 6500.

In order to substantially limit further reaction between the epoxide and amine groups, the amine groups of the reaction mixture are neutralized with a water soluble acid in an amount sufficient to neutralize at least 50 percent, preferably greater than 90 percent, most preferably, essentially all of the amine groups present in the mixture. The resin is then dispersed in water to form a cathodically electrodepositable coating composition. The coating composition may include such commonly employed materials as plasticizing agents and catalysts. While crosslinking agents such as aminoplast resins or blocked isocyanates may also be included in the composition in a limited amount, it is preferable that such crosslinking agents not be included in the composition. The coating composition may be cathodically electrodeposited on a metal substrate and thereafter subjected to baking, during which it crosslinks to form a thermoset film.

Advantageously, these self-crosslinkable resins when used, for example, as a primer coating on steel possess exceptional adhesion to the steel and thus offer excellent corrosion protection for the steel.

Yet another advantage of the partially crosslinked resins of this invention is that they display excellent stability in the coating bath. It has been found that coating baths made according to the invention of this application, wherein all the amine groups have been neutralized, are stable in excess of six weeks and that coatings made from these baths have excellent film quality and corrosion resistance.

Significantly, the resins of this invention offer the advantage that they are made by simpler methods of manufacture and comprise simpler compositions than those of fully epoxide reacted resins conventionally employed in primer coatings. As described above, these conventionally employed resins additionally need a crosslinking agent for curing. Thus, the resins of this invention offer cost advantages in their manufacture, particularly since they are made from materials reacted at room temperature, wherein the reaction mixture need not be agitated during the reaction process.

Best Mode For Carrying Out The Invention

The invention of this application is directed to a cathodically electrodepositable, self-crosslinkable resin dispersed in water as has been described briefly above.

In order to form the electrodepositable, self-crosslinking resin of this invention, an epoxy resin and a fatty amidopolyamine are partially reacted at room temperature in an organic solvent for both reactants. The reaction mixture is allowed to stand or may be stirred, although stirring is not necessary, for a period of time at room temperature, so as to allow the reaction to take place. When the desired number of epoxide groups have reacted, about 20-50 percent, (generally corresponding to a reaction time period of between about 12-36 hours), the reaction mixture is neutralized with a water soluble acid so as to limit the ongoing reaction between the epoxide and the reactive amine groups of the reactants. The amount of acid employed must be sufficient to neutralize at least 50 percent, preferably greater than 90 percent, most preferably, essentially all of the amine groups in the mixture, which amine groups are either present on the self-crosslinkable resin or on unreacted fatty amidopolyamine. However, it appears that essentially all of the fatty amidopolyamine is incorporated to some extent during the reaction period into the self-crosslinkable resin by reaction of fatty polyamine with some of the epoxide groups of the epoxy resin. The neutralized self-crosslinkable resin mixture is then dispersed in water to form a cathodically electrodepositable coating composition comprising the self-crosslinkable resins.

The epoxy resins useful in forming the self-crosslinkable resin of this invention have, on average, more than one and up to about two epoxide groups per molecule. These epoxy resins have an epoxide equivalent weight of between about 400 and about 4000, preferably between about 450 and about 2000. Such polyepoxide resins may be derived from a dihydric phenol or a dihydric alcohol and an epihalohydrin. Examples of epihalohydrins are epichlorohydrin, epibromohydrin and epiiodohydrin with epichlorohydrin being preferred. Dihydric phenols and dihydric alcohols are exemplified by resorcinol, hydroquinone, Bisphenol A, p,p'-dihydroxy benzol phenone, p,p'-dihydroxy phenol, p,p'-dihydroxy diphenol ethane, bis-(2-hydroxy naphtha) methane, 1,5-dihydroxy naphthaline, ethylene glycol, propylene glycol, 1,4-butane diol, hydrogenated Bisphenol A, 1,4-cyclohexane diol, 1,3-cyclopentane diol, cyclohexane dimethanol, and the like. These polyepoxide resins are well known in the art and are made in the desired molecular weights by reacting the epihalohydrin and the diols in various ratios, or by reacting a dihydric phenol with a lower molecular weight polyepoxide resin. Preferred polyepoxide resins are the glycidyl polyethers of Bisphenol A having the epoxide equivalent weight stated above. Examples of epoxy resins which are commercially available and suitable for use in this invention include Epon 1001F, 1002F, 1004F, 1007F, 1009F, available from and a trademark of Shell Chemical Company (Houston, Texas), Araldite 6084, 6097, 6099 7065, 7072 and 7097 available from Ciba-Geigy (Ardsley, N.Y.), and DER 661, 664, 667 and 669 available from Dow Chemical Company (Midland, Michigan). Mixtures of these epoxy resins may also be employed as the epoxy resin reactant useful in forming the self-crosslinking resin of this invention.

The fatty amidopolyamines used in this invention contain at least two reactive amine groups which together contain at least three active amine hydrogens per molecule. During the formation of the self-crosslinkable resin, reaction will take place between active amine hydrogens of the fatty amidopolyamine and epoxide groups of the epoxy resin. The amine groups of the fatty amidopolyamine may be selected from primary, secondary or tertiary amine groups, as long as the polyamine contains at least three active amine hydrogens per molecule. For example, the polyamine may contain three secondary amine groups. Preferably, however, at least one amine of the fatty amidopolyamine is a primary amine group and, more preferably, only one of the amine groups is present as a primary amine group. The preferred embodiment fatty amidopolyamine is an alkylene fatty amidopolyamine containing between about 1-4 alkylene nitrogen units. The fatty portion of the fatty polyamine comprises between about 12-36 carbon atoms, preferably between about 12-18 carbon atoms, most preferably between about 16-18 carbon atoms. The fatty portion may be straight chain or branched, and may be substituted with non-interfering functionality.

The polyamine may not contain any other type of functionality which could react with the epoxide groups of the epoxy resin. That is, no other functionality should be present on the polyamine which would interfere with the reaction of the amine and epoxide groups of the reactants of the mixture. However, groups not reactive with epoxide may be included in the fatty amidopolyamine. One such non-epoxide reactive group which is present is amide.

Preferably, the fatty amidopolyamine has a weight average ($\overline{M}_w$) molecular weight of between about 300 and about 1000, more preferably between about 350 and about 550. Suitable commercially available fatty amidopolyamines which may be employed in this invention include Genamid 747, Genamid 250 and Genamid 2000, with Genamid 250 being preferred, (available from and a trademark of Henkel Corporation, Minneapolis, Minnesota). Mixtures of fatty amidopolyamines as described above could also be employed in this invention as the fatty amidopolyamine reactant.

The epoxy resin and the fatty amidopolyamine are combined in the reaction mixture in amounts so as to provide between 0.25 and 1.0, preferably between 0.5 and 1.0 epoxide groups present on the epoxy resin for each reactive amine group present on the fatty amidopolyamine. The reactants are dissolved in an organic solvent in which both reactants are soluble. The reaction mixture comprises (i) between about 30 and about 75 weight percent solvent and (ii) a total of between about 70 and about 25 weight percent of reactants (A) and (B), preferably between about 40 and about 60 weight percent solvent and between about 60 and about 40 weight percent total of reactants (A) and (B). The reaction temperature of the mixture is between about 18° and about 33° C, preferably between about 21° and about 27° C.

Suitable solvents include alcohols, ethers, ketones, as well as aromatic hydrocarbons and phthalates. Exemplary of the alcohols are butanol, isopropanol, hexanol, etc. Ethers which may be used include, but are not limited to, propylene glycol methyl ether, dipropylene glycol methyl ether and ethylene glycol ether acetate, with the cellosolve® type ethers being preferred. Ketones which may be so employed include methyl butyl ketone, methylisobutyl ketone, methyl propyl ketone, methyl ethyl ketone, etc. Useful aromatic solvents include xylene, toluene, ethyl benzene, etc. Phthalates useful as solvents in this invention include dimethyl, dipropyl, dibutyl, and dioctyl phthalates. Preferably, blends of such solvents are employed as the solvent in this invention. While solvents which may be used have been disclosed above, this disclosure is not meant to be limiting. Other suitable organic solvents which may be used to dissolve the reactant and form the reaction mixture will be apparent to those skilled in the art.

As has been stated above, the reactants are reacted for a period of time so as to react between about 20 and about 50 percent of the epoxide groups present in the reaction mixture. The completeness of the epoxide reaction can be determined by means such as Infrared Absorption. At the desired percent conversion of epoxide groups, the amine groups present in the reaction mixture are neutralized with water soluble acid. The amount of acid used must be more than that needed to simply disperse the resin. Rather, sufficient acid must be employed so as to neutralize at least 50 percent, preferably greater than 90 percent, most preferably, essentially all of the amine groups in the mixture. This neutralizing substantially limits or, in the most preferred embodiment wherein essentially all the amine groups are neutralized, stops any further reaction of amine and epoxide groups. Acids which may be so employed include water soluble monocarboxylic acids such as formic, propionic, lactic, acetic and butanoic, just to name a few, with lactic acid being preferred.

Optionally, other commonly employed materials may be included in the coating composition comprising the dispersed self-crosslinkable resin disclosed in this application. These optional constituents are generally mixed into the reaction mixture prior to the addition of the water soluble acid, although they may be added after the addition of the acid. Such optional constituents include, but are not limited to, plasticizers, pigments, catalysts and crosslinking agents. Such plasticizers include dioctylphthalate, polyhydroxy polyethers (e.g., Eponol 52B40 or Eponol 53B40, Shell Chemical, Houston, Texas), hydroxy acrylate (e.g., G-Cure 868, Rohm & Haas Company, Philadelphia, Pa.), etc. Pigments, when included, generally comprise up to about 4 weight percent of the coating composition bath. Crosslinking agents may include blocked polyisocyanates, aminoplast resins or phenoplast resins. Thus, in addition to the resins ability to self-thermoset, the amine and hydroxyl group of the resin (the hydroxyl being produced by the amine-epoxide reactions) can crosslink with blocked isocyanate at elevated temperatures to form polyurethane and polyurea. The amide and hydroxyl groups can also crosslink with aminoplast or phenoplast crosslinkers at elevated temperatures. However, while crosslinking agents may be included in the coating composition, it is preferred not to employ any additional crosslinking agents. It has been found that the cationic self-crosslinking resin coatings of this invention, when used without additional crosslinking agents, possess greater throwing power than such cationic coating compositions which contain additional crosslinking agents. If however, additional crosslinking materials are employed, they would preferably not comprise more than 6.5 weight percent of the coating bath. Selection of such commonly employed crosslinking agents of the types mentioned above, will be well within the skill of one in the art.

The coatings comprising the dispersed resin of this invention may be coated onto metal substrates by cathodic electrodeposition methods well known to one skilled in the art. Generally, voltages of between about 300 and about 400 volts are employed for between about 2 and about 3 minutes so as to provide coatings between about 12 and about 40 microns. Selection of optimal coating conditions would be well within the skill of one in the art, and those described above are not meant to be limiting to the invention of this application.

The invention will be further understood by referring to the following detailed examples. It should be understood that the specific examples are presented by way of illustration and not by way of limitation.

## Example 1

A self-crosslinking room temperature reacted cathodic electrocoat primer was prepared as follows:

(A) 1750 grams -
Polyglycidyl ether of Bisphenol A (Epon 1004F [1]), possessing an epoxide equivalence of 950, were dissolved into a mixture of

(B) 290 grams
Hexyl glycol,

(C) 1060 grams
Dipropylene glycol methyl ether, and

(D) 370 grams
Dioctylphthalate.

(E) 250 grams
Genamid 250 [2], a room temperature reactive amide possessing an amine equivalent weight of 128, were worked into the resin solution of (A) - (D) at room temperature (about 22°-25°C) and permitted to stand for 20 hours overnight. Immediately afterwards

(F) 200 grams
88% lactic acid were worked into the reacted resin from (E) to neutralize all the amine groups in the reaction mixture. Using a high speed stirrer or blender

(G) 53 grams
Carbon black pigment were blended into the acid neutralized resin mixture from (F).

(H) 6027 grams
Deionized water were added to the paint from (G) with mixing to give

(I) 10,000 grams
20% by weight cathodic electrocoat paint emulsion, which was stirred vigorously for 2 to 3 hours before being diluted with

(J) 10,000 grams
Deionized water to give

(K) 20,000 grams
10.3 percent by weight black electrocoat primer bath.

The bath from (K) was placed into a stainless steel container and stirred for about 24 hours. A zinc phosphated steel panel cathode was coated at 300 volts for 2 minutes at 23°C. After the panel

[1]Trademark of Shell Chemical Company

[2]Trademark of Henkel Corp., Minneapolis, Minn.

was baked at 182°C air temperature for 25 minutes, the panel had a 22.8 micron thick coating. Additional panels were coated and baked as described. The panels after salt spray testing testing according to ASTM Test B-117 for 500 hours showed no sign of failure. The bath from (K) showed excellent stability in excess of six weeks, producing electrocoats with excellent film quality and corrosion resistance.

Example 2

A self-crosslinking, room temperature reacted cathodic electrocoat primer was prepared as follows:

(A) 1810 grams
Epon 1004F [1] were dissolved into a mixture of
(B) 370 grams
Dioctyphthalate,
(C) 320 grams
Hexyl glycol, and
(D) 1150 grams
Dipropylene glycol methyl ether.
(E) 190 grams
Genamid 2000 [2] having an amine equivalent weight of 93.5 were blended with the resin solution of (A)-(D) at about 23°C and the mixture was permitted to stand at room temperature (about 23°-25°C) for 16 hours. Immediately afterwards the reacted resin from (E) was blended with
(F) 53.3 grams
Carbon black pigment using a high speed blender as in Example 1.
(G) 200 grams
88% lactic acid were used to neutralized all amine groups in the pigmented resin. Deionized water was worked into the neutralized paint to give
(H) 10,000 grams
Emulsion, which was vigorously blended on a high speed stirrer for 2 to 3 hours. Afterwards
(I) 10,000 grams
Deionized water were used to dilute the emulsion from (H) to a 20,000 gram 10% solids by weight electrocoat primer bath.

The bath from (I) was placed into a stainless steel container and stirred for at least 24 hours. A zinc phosphated steel panel cathode was coated at 300 volts for two minutes, at 23°C. After the panel was baked at 180°C for 25 minutes, the panel was found to be coated by a 22.0 micron thick coating. Additional similarly coated panels after being baked as described above were salt spray tested as in Example 1 for 500 hours, and showed no signs of failure. As in Example 1, the bath (I) showed excellent stabililty and coatings from this bath provided excellent corrosion resistance.

Example 3

A self-crosslinking room temperature reacted cathodic electrocoat primer paint was prepared as follows:

(A) 1590 grams
Epon 1001F [1] were dissolved in a mixture of
(B) 1160 grams
Dipropylene glycol methyl ether,
(C) 320 grams
Hexyl glycol, and
(D) 370 grams
Dioctylphthalate.
(E) 410 grams
Genamid 250 [2] were blended into the resin solution from (A) - (D) at about 23°C and permitted to stand for 16 hours at room temperature (about 23°-25°C). Immediately afterwards the reacted resin from (E) was blended with
(F) 400 grams
Titanium dioxide and
(G) 45 grams
Carbon black. All the amine group were neutralized with
(H) 320 grams
88% lactic acid, which were worked into the pigment resin (G). The paint from (H) was emulsified with deionized water to a weight of 10,000 grams, followed by vigorous stirring of the emulsion for 2 to 3 hours. Afterwards
(I) 10,000 grams
Deionized water were used to dilute the emulsion to a 20,000 grams electrocoat bath.

The electrocoat bath was placed into a stainless steel container and agitated with a stirrer. Zinc phosphated panels were coated and baked as in Example 1. The panels had coatings 25 micron

[1]Trademark of Shell Chemical Company

[2]Trademark of Henkel Corp., Minneapolis, Minn.

[1]Trademark of Shell Chemical Company

[2]Trademark of Henkel Corp., Minneapolis, Minn.

thick which salt spray tested without failure for 500 hours. Stability and corrosion resistance of the bath and electrocoats were excellent.

Example 4

A self-crosslinking electrocoat paint composed of a blend of epoxy resins was prepared as follows:
(A) 1630 grams
Epon 1004F [1] and
(B) 180 grams
Epon 1001F [1] were dissolved in a mixture of
(C) 320 grams
Hexyl glycol,
(D) 1160 grams
Dipropylene glycol methyl ether, and
(E) 370 grams
Dioctylphthalate.
(F) 190 grams
Genamid 2000 [2] possessing an amine equivalent weight of 93.5 were blended into the resin solution of (A) - (E) at about 22°C, and the mixture from (F) was permitted to stand in the covered container for 16 hours (overnight) at room temperature (about 22°-25°C.
(G) 53.3 grams
Carbon black were worked into the reacted resin from (F) along with
(H) 213 grams
88% lactic acid. Deionized water was mixed into the completely neutralized paint from (H) slowly for emulsification to produce a
(I) 10,000 grams
Electrocoat primer paint emulsion which was vigorously stirred for 2 to 3 hours.
(J) 10,000 grams
Deionized water was finally mixed into the paint emulsion from (I), to yield a
(K) 20,000 grams
Electrocoat primer paint bath.
As in Example 1, the bath was placed into a stainless steel container and zinc phosphated steel panel cathodes were coated at 300 volts for 2 minutes at 23°C. After baking the coated panels in a 180°C convection oven for 25 minutes, the panels had coatings 17.8 microns thick. All panels passed 500 hours salt spray testing.

Example 5

A amido epoxy blocked isocyanate electrocoat composition was prepared as follows:
(A) 2180 grams
Epon 1007F [1] and
(B) 550 grams
Epon 1001F [1] were dissolved in a mixture of
(C) 2070 grams
Dowanol DPM [2] (dipropylene glycol methyl ether),
(D) 570 grams
Hexylcellosolve, and
(E) 650 grams
Dioctylphthalate.
(F) 290 grams
Genamid 250 [3] were reacted at room temperature with the resin solution from (A) - (E) for 16 hours, after which
(G) 242.5 grams
Desmodur 2412 [4] (blocked isocyanate) along with
(H) 231.5 grams
88% lactic acid and
(I) 150.0 grams
Carbon black were worked into (G) to give a neutralized pigmented resin. Deionized water was added to disperse the neutralized paint from (I) to give a 20,000 gram bath.
The bath was placed into a stainless steel container and stirred for 24 hours. A throwing power test according to Ford Test Method was performed using zinc phosphated panels as the cathode. The panels showed a throwing power of 12.7cm (5 inches) using a voltage of 400 volts for 2½ minutes at 23°C. The bath showed excellent stability and coating produced from the bath, after baking as in Example 1, were smooth, glossy and displayed

[1]Trademark of Shell Chemical Company

[2]Trademark of Henkel Corp., Minneapolis, Minn.

[1]Trademark of Shell Chemical Company

[2]Trademark of Dow Chemical Company, Midland, MI.

[3]Trademark of Henkel Corp., Minneapolis, Minn.

[4]Trademark of Mobay Chemical Company, Akron, Ohio.

excellent corrosion resistance.

Example 6

A amido epoxy aminoplast crosslinking cathodic electrocoat primer paint was prepared as in Example 5 except the block isocyanate in (G) of Example 5 was replaced by 176 grams Cymel-1141, a melamine formaldehyde crosslinking agent,available from American Cyanamide, Wayne, N.J.

The bath was placed into a stainless steel container as in Example 5 and stirred at least 24 hours. The throw power test conducted on the bath as in Example 5 showed 12.7cm (5 inches) throw on zinc phosphated steel.

Example 7

A self-crosslinking amido epoxy cathodic electrocoat primer paint was prepared as in Example 5 except that no crosslinking agent (G) was employed in the paint.

The bath was placed into a stainless steel container and stirred for at least 24 hours. The throw power test conducted at 400 volts for 2½ minutes at 23°C showed 31.75cm (12.5) inches throw power.

Example 8

A self-crosslinking room temperature reacted cathodic electrocoat primer was prepared as follows:
(A) 1750 grams
Polyglycidyl ether of Bisphenol A (Epon 1004F [1]), possessing an epoxide equivalence of 950, were dissolved into a mixture of
(B) 1350 grams
Dipropylene glycol methyl ether, and
(C) 370 grams
Dioctylphthalate.
(D) 250 grams
Genamid 250 [2], a room temperature reactive amide possessing an amine equivalent weight of 128, were worked into the resin solution of (A) - (C) at room temperature and permitted to stand overnight. Immediately afterwards
(E) 200 grams
88% lactic acid were worked into the reacted resin mixture from (D), using a high speed stirrer or blender, so as to neutralize all the amine groups in the resin mixture.

(F) 53 grams
Carbon black pigment were blended into the neutralized paint from (E).
(G) 6027 grams
Deionized water were added to the paint from (F) with mixing to give
(H) 10,000 grams
20 percent by weight cathodic electrocoat paint emulsion, which was stirred vigorously for 2 to 3 hours before diluting with
(I) 10,000 grams
Deionized water to give
(J) 20,000 grams
10.3 percent by weight black electrocoat primer bath.

The bath from (J) was placed into a stainless steel container and stirred for about 24 hours. A zinc phosphated steel panel cathode was coated at 300 volts for 2 minutes at 23°C. After the panel is baked at 182°C air temperature for 25 minutes, the panel had a 22.8 micron thick coating. Additional panels were coated and salt spray tested according to ASTM Test B-117. The panels after testing for 500 hours showed no sign of failure.

Example 9

A self-crosslinking, room temperature reacted cathodic electrocoat paint was prepared as in Example 1 except that 117 grams of acetic acid was used in place of the lactic acid in (F) of Example 1 to neutralize all the amine groups.

The bath from (K) was placed into a stainless steel container and stirred 24 hours. Zinc phosphated steel panels used as the cathode were coated at 350 volts for 2½ minutes at 23°C. The panels were baked for 25 minutes at 182°C to yield 17 micron thick cathodic electrocoats. The coated panels showed no sign of failure after being 500 hours corrosion tested according to ASTM Test B-117.

Example 10

A self-crosslinking cathodic electrocoat primer was prepared according to Example 5, except that no crosslinking agent (G) was employed in the primer composition and the amount of 88% lactic acid used was 116 grams.

After the 16 hour reaction period as in (F) of Example 5, the amine groups in the reaction mixture were neutralized with 116 grams of 88% lactic acid (that amount of acid required to neutralized

[1]Trademark of Shell Chemical Company

[2]Trademark of Henkel Corp., Minneapolis, Minn.

only about one half of all amine groups in the resin (F) of Example 5).

The bath was placed into a stainless steel container and stirred for about 72 hours. A zinc phosphated steel panel cathode electrode was coated at 350 volts for 2 minutes. After the coated panel was baked at about 180°C for 25 minutes, the coating was 17 micron thick, glossy, smooth and showed no signs of corrosion failure after 500 hours of salt corrosion testing, ASTM B-117. After about 2½ weeks another zinc phosphated steel cathode panel was coated, which after baking produced a non-glossy, rough appearing, non-uniform coating which failed 500 hour corrosion resistance testing.

## Industrial Applicability

It should be apparent from the foregoing, that the cathodically electrodepositable coating compositions of this invention find application as, for example, primer coatings for metals to prevent corrosion.

## Claims

1. A cathodically electrodepositable coating composition, characterized in that it comprises an aqueous dispersion of self-crosslinkable resin bearing amine and epoxide functionalities and being prepared by reacting:

(A) epoxy resin having (a) on average, more than one and up to two epoxide groups per molecule, and (b) an epoxide equivalent weight of between 400 and 4000; and

(B) fatty amidopolyamine containing (a) amide functionality, and (b) at least two reactive amine groups together having at least three active amine hydrogens per molecule and no other groups capable of reacting with epoxide groups, and wherein said fatty portion comprises between 12-36 carbon atoms,

(1) in a reaction mixture comprising (i) a total of between 70 and 25 weight percent of reactants (A) and (B) and (ii) between 30 and 75 weight percent organic solvent for said reactants, (2) in amounts so as to provide between 0.25 and 1.0 reactive amine groups of (B) per each epoxide group of (A), (3) at a reaction mixture temperature of between 18° and 33°C, and (4) for a period of time sufficient to react between 20 and 50 percent of said epoxide groups with said active amine hydrogens to form an amine and epoxide functional, partially crosslinked resin having a weight average ($\overline{M}_w$) molecular weight of between 1300 and 12,000, and

subsequently neutralizing amine groups present in said reaction mixture with water soluble acid in an amount sufficient to neutralize at least 50 percent of said amine groups present therein, and thereafter dispersing said resin in water.

2. A cathodically electrodepositable coating composition according to claim 1, wherein said water soluble acid is employed in an amount sufficient to neutralize greater than 90 percent of said amine groups present therein.

3. A cathodically electrodepositable coating composition according to claim 2, wherein said water soluble acid is employed in an amount sufficient to essentially completely neutralize all of said amine groups present therein.

4. A cathodically electrodepositable coating composition according to claim 1, wherein said epoxy resin is selected from polyglycidyl ethers of Bisphenol A and mixtures thereof.

5. A cathodically electrodepositable coating composition according to claim 1, wherein said epoxy resin has an equivalent weight of between 450 and 2000.

6. A cathodically electrodepositable coating composition according to claim 1, wherein said fatty portion of said fatty amidopolyamine comprises a $C_{12}$ - $C_{18}$ group.

7. A cathodically electrodepositable coating composition according to claim 1, wherein said fatty amidopolyamine has a weight average ($\overline{M}_w$) molecular weight of between 300 and 1000.

8. A cathodically electrodepositable coating composition according to claim 1, wherein said fatty amidopolyamine contains at least one primary amine group.

9. A cathodically electrodepositable coating composition according to claim 1, wherein said fatty amidopolyamine contains one primary amine group.

10. A cathodically electrodepositable coating composition according to claim 1, wherein said fatty amidopolyamine is a fatty amidoalkylenepolyamine.

11. A cathodically electrodepositable coating composition according to claim 1, wherein said reaction mixture comprises (i) a total of between 40 and 60 weight percent of said reactants (A) and (B) and (ii) between 60 and 40 weight percent of said solvent.

12. A cathodically electrodepositable coating composition according to claim 1, wherein said organic solvents are selected from alcohols, ethers, ketones, aromatic hydrocarbons, phthalates and mixtures thereof.

13. A cathodically electrodepositable coating composition according to claim 12, wherein said organic solvent comprises ethyleneglycol ether compounds.

14. A cathodically electrodepositable coating composition according to claim 1, wherein said reaction mixture temperature is between 21° and 27° C.

15. A cathodically electrodepositable coating composition according to claim 1, wherein said epoxy resin and said fatty amidopolyamine are combined in said reaction mixture in amounts so as to provide between 0.5 and 1.0 reactive amine groups of (B) per each epoxide group of (A).

16. A cathodically electrodepositable coating composition according to claim 1, wherein said resin product has a weight average ($\overline{M}_w$) molecular weight of between 2400 and 6500.

17. A cathodically electrodepositable coating composition according to claim 1, wherein said water soluble acid comprises one or more water soluble monocarboxylic acids.

18. A cathodically electrodepositable coating composition according to claim 1, wherein said coating composition further comprises crosslinking agents selected from blocked isocyanates, amine aldehyde resins and phenoplast resins.

19. A process for the preparation of a cathodically electrodepositable coating composition comprising an aqueous dispersion of self-crosslinkable resin bearing amine and epoxide functionalities, said process being characterized in that it comprises reacting:
(A) epoxy resin having (a) on the average, more than one and up to two epoxide groups per molecule, and (b) an epoxide equivalent weight of between 400 and 4000; and
(B) fatty amidopolyamine containing (a) amide functionality, and (b) at least two reactive amine groups together having at least three active amine hydrogens per molecule and no other groups capable of reacting with epoxide groups, and wherein said fatty portion comprises between 12-36 carbon atoms,
(1) in a reaction mixture comprising (i) a total of between 70 and 25 weight percent of reactants (A) and (B) and (ii) between 30 and 75 weight percent organic solvent for said reactants, (2) in amounts so as to provide between 0.25 and 1.0 reactive amine groups of (B) per each epoxide group Of (A), (3) at a reaction mixture temperature of between 18° and 33° C, and (4) for a period of time sufficient to react between 20 and 50 percent of said epoxide groups with said active amine hydrogens to form an amine and epoxide functional, partially crosslinked resin having a weight average ($\overline{M}_w$) molecular weight of between 1300 and 12,000, and
subsequently neutralizing the amine groups present in said reaction mixture with water soluble acid in an amount sufficient to neutralize at least 50 percent of said amine groups present therein, and thereafter dispersing said resin in water.

20. A process for the preparation of a cathodically electrodepositable coating composition according to claim 19, wherein said water soluble acid is employed in an amount sufficient to neutralize greater than 90 percent of said amine groups present therein.

**Revendications**

1. Une composition de revêtement applicable par électrodéposition cathodique, caractérisée en ce qu'elle comprend une dispersion aqueuse d'une résine autoréticulable qui porte des fonctionnalités amine et époxyde et qui est préparée en faisant réagir :
(A) une résine époxy ayant (a) en moyenne, plus d'un et jusqu'à deux groupes époxy par molécule, et (b) un poids équivalent d'époxyde compris entre 400 et 4000 ; et
(B) une amidopolyamine grasse contenant (a) une fonctionnalité amide et (b) au moins deux groupes amino réactifs ayant ensemble au moins trois atomes d'hydrogène d'amine actifs par molécule, et ne contenant aucun autre groupe capable de réagir avec les groupes époxy, et dans laquelle ladite portion grasse comprend entre 12 et 36 atomes de carbone,
(1) dans un mélange réactionnel comprenant (i) entre 70 et 25 pour cent en poids au total des corps réagissants (A) et (B) et (ii) entre 30 et 75 pour cent en poids d'un solvant organique pour lesdits corps réagissants, (2) en des quantités convenant pour fournir entre 0,25 et 1,0 groupe amino réactif de (B) pour chaque groupe époxy de (A), (3) à une température du mélange réactionnel comprise entre 18° et 33° C, et (4) pendant une période de temps suffisante pour faire réagir entre 20 et 50 pour cent desdits groupes époxy avec lesdits atomes d'hydrogène d'amine actifs pour former une résine partiellement réticulée à fonctionnalités amine et époxyde ayant un poids moléculaire moyen en poids ($\overline{M}_p$) compris entre 1300 et 12 000, et

en neutralisant ensuite les groupes amino présents dans ledit mélange réactionnel avec un acide hydrosoluble en une quantité suffisante pour neutraliser au moins 50 pour cent desdits groupes amino présents, puis en dispersant ladite résine dans de l'eau.

2. Une composition de revêtement applicable par électrodéposition cathodique selon la revendication 1, dans laquelle ledit acide hydrosoluble est utilisé en une quantité suffisante pour neutraliser plus de 90 pour cent desdits groupes amino présents.

3. Une composition de revêtement applicable par électrodéposition cathodique selon la revendication 2, dans laquelle ledit acide hydrosoluble est utilisé en une quantité suffisante pour neutraliser essentiellement complètement la totalité desdits groupes amino présents.

4. Une composition de revêtement applicable par électrodéposition cathodique selon la revendication 1, dans laquelle ladite résine époxy est choisie parmi les polyéthers glycidyliques de bisphénol A et leurs mélanges.

5. Une composition de revêtement applicable par électrodéposition cathodique selon la revendication 1, dans laquelle ladite résine époxy a un poids équivalent compris entre 450 et 2000.

6. Une composition de revêtement applicable par électrodéposition cathodique selon la revendication 1, dans laquelle ladite portion grasse de ladite amidopolyamine grasse comprend un groupe en $C_{12}$-$C_{18}$.

7. Une composition de revêtement applicable par électrodéposition cathodique selon la revendication 1, dans laquelle laite amidopolyamine grasse a un poids moléculaire moyen en poids ($\overline{M}_p$) compris entre 300 et 1000.

8. Une composition de revêtement applicable par électrodéposition cathodique selon la revendication 1, dans laquelle ladite amidopolyamine grasse contient au moins un groupe amino primaire.

9. Une composition de revêtement applicable par électrodéposition cathodique selon la revendication 1, dans laquelle ladite amidopolyamine grasse contient un seul groupe amino primaire.

10. Une composition de revêtement applicable par électrodéposition cathodique selon la revendication 1, dans laquelle ladite amidopolyamine grasse est une amidoalkylènepolyamine grasse.

11. Une composition de revêtement applicable par électrodéposition cathodique selon la revendication 1, dans laquelle ledit mélange réactionnel comprend (i) entre 40 et 60 pour cent en poids au total desdits corps réagissants (A) et (B), et (ii) entre 60 et 40 pour cent en poids dudit solvant.

12. Une composition de revêtement applicable par électrodéposition cathodique selon la revendication 1, dans laquelle lesdits solvants organiques sont choisis parmi les alcools, les éthers, les cétones, les hydrocarbures aromatiques, les phtalates et leurs mélanges.

13. Une composition de revêtement applicable par électrodéposition cathodique selon la revendication 12, dans laquelle ledit solvant organique comprend des éthers d'éthylène-glycol.

14. Une composition de revêtement applicable par électrodéposition cathodique selon la revendication 1, dans laquelle ladite température du mélange réactionnel est comprise entre 21° et 27° C.

15. Une composition de revêtement applicable par électrodéposition cathodique selon la revendication 1, dans laquelle ladite résine époxy et ladite amidopolyamine grasse sont associées dans ledit mélange réactionnel en des quantités convenant pour fournir entre 0,5 et 1,0 groupe amino réactif de (B) pour chaque groupe époxy de (A).

16. Une composition de revêtement applicable par électrodéposition cathodique selon la revendication 1, dans laquelle ladite résine produite a un poids moléculaire moyen en poids ($\overline{M}_p$) compris entre 2400 et 6500.

17. Une composition de revêtement applicable par électrodéposition cathodique selon la revendication 1, dans laquelle ledit acide hydrosoluble comprend un ou plusieurs acides monocarboxyliques hydrosolubles.

18. Une composition de revêtement applicable par électrodéposition cathodique selon la revendication 1, dans laquelle ladite composition de revêtement comprend de plus des agents réticulants choisis parmi les isocyanates bloqués, les résines amine-aldéhyde et les résines phénoplastes.

19. Un procédé pour la préparation d'une composition de revêtement applicable par électrodéposition cathodique comprenant une dispersion aqueuse d'une résine autoréticulable portant des fonctionnalités amine et époxyde, ledit procédé étant caractérisé en ce qu'il consiste à faire réagir :

    (A) une résine époxy ayant (a) en moyenne, plus d'un et jusqu'à deux groupes époxy par molécule, et (b) un poids équivalent d'époxyde compris entre 400 et 4000 ; et
    (B) une amidopolyamine grasse contenant (a) une fonctionnalité amide et (b) au moins deux groupes amino réactifs ayant ensemble au moins trois atomes d'hydrogène d'amine actifs par molécule, et ne contenant aucun autre groupe capable de réagir avec les groupes époxy, et dans laquelle ladite portion grasse comprend entre 12 et 36 atomes de carbone,
    (1) dans un mélange réactionnel comprenant (i) entre 70 et 25 pour cent en poids au total des corps réagissants (A) et (B) et (ii) entre 30 et 75 pour cent en poids d'un solvant organique pour lesdits corps réagissants, (2) en des quantités convenant pour fournir entre 0,25 et 1,0 groupe amino réactif de (B) pour chaque groupe époxy de (A), (3) à une température du mélange réactionnel comprise entre 18° et 33° C, et (4) pendant une période de temps suffisante pour faire réagir entre 20 et 50 pour cent desdits groupes époxy avec lesdits atomes d'hydrogène d'amine actifs pour former une résine partiellement réticulée à fonctionnalités amine et époxyde ayant un poids moléculaire moyen en poids ($\overline{M}_p$) compris entre 1300 et 12 000, et
    à neutraliser ensuite les groupes amino présents dans ledit mélange réactionnel avec un acide hydrosoluble en une quantité suffisante pour neutraliser au moins 50 pour cent desdits groupes amino présents, puis à disperser ladite résine dans de l'eau.

20. Un procédé pour la préparation d'une composition de revêtement applicable par électrodéposition cathodique selon la revendication 19, dans lequel ledit acide hydrosoluble est utilisé en une quantité suffisante pour neutraliser plus de 90 pour cent desdits groupes amino présents.

**Patentansprüche**

1. Kathodisch elektroabscheidbare Beschichtungszusammensetzung, dadurch gekennzeichnet, daß sie eine wässrige Dispersion von selbst vernetzendem Harz mit Amin- und Epoxidfunktionalitäten umfaßt und durch Umsetzung von

    (A) Epoxyharz mit (a) im Mittel mehr als einer und bis zu zwei Epoxidgruppen pro Molekül und (b) einem Epoxidäquivalentgewicht zwischen 400 und 4 000; sowie
    (B) Fettamidopolyamin mit (a) Amidfunktionalität und (b) wenigstens zwei reaktiven Amingruppen, die zusammen wenigstens drei aktive Aminwasserstoffe pro Molekül und keine anderen Gruppen, die mit Epoxidgruppen reagieren können, aufweisen und worin der Fettanteil zwischen 12 und 36 Kohlenstoffatome aufweist;
    (1) in einer Reaktionsmischung, die (i) insgesamt zwischen 70 und 25 Gew.-% Reaktanden (A) und (B) und (ii) zwischen 30 und 75 Gew.-% organisches Lösungsmittel für diese Reaktanden umfaßt, (2) in Mengen, um zwischen 0,25 und 1,0 reaktive Amingruppen von (B) für jede Epoxidgruppe von (A) bereitzustellen, (3) bei einer Temperatur der Reaktionsmischung zwischen 18° und 33° C und (4) über einen Zeitraum, der ausreicht, zwischen 20 und 50 % der Epoxidgruppen mit den aktiven Aminwasserstoffen unter Bildung eines amin- und epoxidfunktionellen, teilweise vernetzten Harzes mit einem Gewichtsmittel-Molekulargewicht ($\overline{M}_w$) zwischen 1 300 und 12 000 umzusetzen, und
    anschließendes Neutralisieren der in der Reaktionsmischung vorhandenen Amingruppen mit wasserlöslicher Säure in einer Menge, die ausreicht, wenigstens 50 % der darin vorhandenen Amingruppen zu neutralisieren und danach Dispergieren des Harzes in Wasser hergestellt ist.

2. Kathodisch elektroabscheidbare Beschichtungszusammensetzung nach Anspruch 1, worin die wasserlösliche Säure in einer Menge angewandt wird, die ausreicht, mehr als 90 % der darin vorhandenen Amingruppen zu neutralisieren.

3. Kathodisch elektroabscheidbare Beschichtungszusammensetzung nach Anspruch 2, worin die wasserlösliche Säure in einer Menge angewandt wird, die ausreicht, im wesentlichen alle darin vorhandenen Amingruppen vollständig zu neutralisieren.

4. Kathodisch elektroabscheidbare Beschichtungszusammensetzung nach Anspruch 1, worin das Epoxyharz aus Polyglycidylethern von Bisphenol A und Mischungen davon ausgewählt ist.

5. Kathodisch elektroabscheidbare Beschichtungszusammensetzung nach Anspruch 1, worin das Epoxyharz ein Äquivalentgewicht zwischen 450 und 2 000 hat.

6. Kathodisch elektroabscheidbare Beschichtungszusammensetzung nach Anspruch 1, worin der Fettanteil des Fettamidopolyamins eine $C_{12}$-$C_{18}$-Gruppe umfaßt.

7. Kathodisch elektroabscheidbare Beschichtungszusammensetzung nach Anspruch 1, worin das Fettamidopolyamin ein Gewichtsmittelmolekulargewicht ($\overline{M}_w$) zwischen 300 und 1 000 hat.

8. Kathodisch elektroabscheidbare Beschichtungszusammensetzung nach Anspruch 1, worin das Fettamidopolyamin wenigstens eine primäre Amingruppe enthält.

9. Kathodisch elektroabscheidbare Beschichtungszusammensetzung nach Anspruch 1, worin das Fettamidopolyamin eine primäre Amingruppe enthält.

10. Kathodisch elektroabscheidbare Beschichtungszusammensetzung nach Anspruch 1, worin das Fettamidopolyamin ein Fettamidoalkylenpolyamin ist.

11. Kathodisch elektroabscheidbare Beschichtungszusammensetzung nach Anspruch 1, worin die Reaktionsmischung (i) insgesamt zwischen 40 und 60 Gew.-% Reaktanden (A) und (B) und (ii) zwischen 60 und 40 Gew.-% Lösungsmittel enthält.

12. Kathodisch elektroabscheidbare Beschichtungszusammensetzung nach Anspruch 1, worin die organischen Lösungsmittel aus Alkoholen, Ethern, Ketonen, aromatischen Kohlenwasserstoffen, Phthalaten und Mischungen davon ausgewählt sind.

13. Kathodisch elektroabscheidbare Beschichtungszusammensetzung nach Anspruch 12, worin das organische Lösungsmittel Ethylenglykoletherverbindungen umfaßt.

14. Kathodisch elektroabscheidbare Beschichtungszusammensetzung nach Anspruch 1, worin die Temperatur der Reaktionsmischung zwischen 21° und 27° C ist.

15. Kathodisch elektroabscheidbare Beschichtungszusammensetzung nach Anspruch 1, worin das Epoxyharz und das Fettamidopolyamin in der Reaktionsmischung in Mengen zusammengebracht werden, das zwischen 0,5 und 1,0 reaktive Amingruppen (B) pro Epoxidgruppe (A) vorhanden sind.

16. Kathodisch elektroabscheidbare Beschichtungszusammensetzung nach Anspruch 1, worin das Harzprodukt ein Gewichtsmittelmolekulargewicht ($\overline{M}_w$) zwischen 2 400 und 6 500 hat.

17. Kathodisch elektroabscheidbare Beschichtungszusammensetzung nach Anspruch 1, worin die wasserlösliche Säure ein oder mehrere wasserlösliche Monocarbonsäuren umfaßt.

18. Kathodisch elektroabscheidbare Beschichtungszusammensetzung nach Anspruch 1, worin die Beschichtungszusammensetzung weiterhin aus blockierten Isocyanaten, Aminaldehydharzen und Phenoplastharzen ausgewählte Vernetzer enthält.

19. Verfahren zur Herstellung einer kathodisch elektroabscheidbaren Beschichtungszusammensetzung, die eine wässrige Dispersion eines selbst vernetzenden Harzes mit Amin- und Epoxidfunktionalitäten umfaßt, welches Verfahren dadurch gekennzeichnet ist, daß es die Umsetzung von

(A) Epoxyharz mit (a) im Mittel mehr als einer und bis zu zwei Epoxidgruppen pro Molekül und (b) einem Epoxidäquivalentgewicht zwischen 400 und 4 000; sowie

(B) Fettamidopolyamin mit (a) Amidfunktionalität und (b) wenigstens zwei reaktiven Amingruppen, die zusammen wenigstens drei aktive Aminwasserstoffe pro Molekül und keine andere Gruppen, die mit Epoxidgruppen reagieren können, aufweisen und worin der Fettanteil zwischen 12 und 36 Kohlenstoffatome aufweist;

(1) in einer Reaktionsmischung, die (i) insgesamt zwischen 70 und 25 Gew.-% Reaktanden (A) und (B) und (ii) zwischen 30 und 75 Gew.-% organisches Lösungsmittel für diese Reaktanden umfaßt, (2) in Mengen, um zwischen 0,25 und 1,0 reaktive Amingruppen von (B) für jede Epoxidgruppe von (A) bereitzustellen, (3) bei einer Temperatur der Reaktionsmischung zwischen 18° und 33° C und (4) über einen Zeitraum, der ausreicht, zwischen 20 und 50 % der Epoxidgruppen mit den aktiven Aminwasserstoffen unter Bildung eines amin- und epoxidfunktionellen, teilweise vernetzten Harzes mit einem Gewichtsmittel-Molekulargewicht ($\overline{M}_w$) zwischen 1 300 und 12 000 umzusetzen, und

anschließendes Neutralisieren der in der Reaktionsmischung vorhandenen Amingruppen mit wasserlöslicher Säure in einer Menge, die ausreicht, wenigstens 50 % der darin vorhandenen Amingruppen zu neutralisieren und danach Dispergieren des Harzes in Wasser umfaßt.

20. Verfahren zur Herstellung einer kathodisch elektroabscheidbaren Beschichtungszusammensetzung nach Anspruch 19, worin die wasserlösliche Säure in einer Menge angewandt wird, die ausreicht, die darin vorhandenen Amingruppen zu mehr als 90 % zu neutralisieren.